# EUROPÄISCHE PATENTANMELDUNG

(11) **EP 2 460 649 A1**
(43) Veröffentlichungstag der Anmeldung: **06.06.2012**
(21) Anmeldenummer: 10193452.9
(22) Anmeldetag: 02.12.2010
(51) Int. Cl.: B29D 22/00, B32B 25/10, D01F 6/88, D01F 6/90, D01F 6/92, D02G 3/48, D06N 3/00

(54) **Elastomer-Faser-Verbund, Verfahren zur Herstellung und dessen Verwendung**

(71) Anmelder: Rhein Chemie Rheinau GmbH, 68219 Mannheim (DE)
(72) Erfinder: Wenzel, Volker, 68542, Heddesheim (DE); Fruth, Andrea, 65189, Wiesbaden (DE); Laufer, Wilhelm, 67158, Ellerstadt (DE); Eckert, Armin, 68794, Oberhausen-Rheinhausen (DE); Cano Sierra, Ana Maria, 69117, Heidelberg (DE); Weigel-Eckert, Marion, 76879, Bornheim (DE)
(74) Vertreter: Siegers, Britta

(57) **Zusammenfassung**

Die Erfindung betrifft einen neuartigen Elastomer-Faser-Verbund aus den aufeinanderfolgenden Schichten aus a) mindestens einem Elastomer, b) mindestens einem Resorcin-Formaldehyd-Latex-Kondensat (RFL) und c) mindestens einem Carbodiimid-haltigen Gewebe aus Polyamid-Polyester-Fasern, Verfahren zur Herstellung und dessen Verwendung.

## Beschreibung

Gegenstand der Erfindung ist ein neuartiger Elastomer-Faser-Verbund aus den aufeinanderfolgenden Schichten aus a) mindestens einem Elastomer, b) mindestens einem Resorcin-Formaldehyd-Latex-Kondensat (RFL) und c) mindestens einem Carbodiimid-haltigen Gewebe aus Polyamid-Polyester-Fasern, Verfahren zur Herstellung und dessen Verwendung.

Elastomer-Faser-Verbunde werden vor allem im Bereich der Automobilindustrie und der Förderung eingesetzt. Zur Gewährleistung hoher Qualitäts- und Sicherheitsstandards ist eine gute Haftung der Fasern auf dem Elastomer unumgänglich. Besonders bevorzugte Fasermaterialien sind Polyamid und Polyester. Polyamid zeigt gegenüber dem Polyester eine deutlich verbesserte Haftung auf dem Elastomer, hat jedoch den Nachteil, sehr teuer zu sein. Daher wird zusehends versucht, dieses durch die kostengünstigere Variante Polyester zu ersetzen, was jedoch aufgrund der Unverträglichkeit der beiden Materialien nur eingeschränkt möglich ist. Aus CN-101333717A ist bekannt bis zu 10% des Polyamids durch Polyester zu ersetzen, wobei eine bessere Zugfestigkeit der Fasern erreicht wird. Allerdings sind die Haftungseigenschaften auf Gummi unbefriedigend.

Aufgabe der vorliegenden Erfindung war es, einen Elastomer-Faser-Verbund auf Basis von Fasern aus Polyamid und Polyester bereitzustellen, der durch einen hohen Anteil an Polyester kostengünstiger ist als reine Polyamidfasern und über eine deutlich verbesserte Haftfestigkeit im Vergleich zur Polyesterfaser auf dem Elastomer verfügt.

Diese Aufgabe konnte überraschenderweise durch einen neuartigen Elastomer-Faser-Verbund gelöst werden, der neben einer Elastomerschicht und einer Schicht aus mindestens einem Resorcin-Formaldehyd-Latex-Kondensat (RFL) auch ein Gewebe aus einer Carbodiimid-haltigen Polyamid-Polyester-Faser enthält.

Gegenstand der vorliegenden Erfindung sind daher Elastomer-Faser-Verbunde, die die aufeinander folgenden Schichten aus
a) mindestens einem Elastomer,
b) mindestens einem Resorcin-Formaldehyd-Latex-Kondensat (RFL) und
c) mindestens einem Gewebe aus Polyamid-Polyester-Fasern enthalten, wobei die Polyamid-Polyester-Fasern mindestens ein Carbodiimid enthalten.

Bei dem Elastomer-Faser-Verbund im Sinne der Erfindung handelt es sich vorzugsweise um faserverstärkte Elastomere, wie z.B. beschrieben in The Application of Textile Rubber, David B. Wootton, Rapra Technology Limited, S. 10-12, 2001.

Bei dem Elastomer handelt es sich um es sich um vernetzte oder unvernetzte Elastomere auf Basis von (SBR)- Styrol-Butadien-Kautschuk, (BR-) Butadien-Kautschuk, (NR) Naturkautschuk, (IR-) synthetischem Naturkautschuk, Polyurethan-Elastomeren oder Mischungen daraus. Dem Fachmann sind diese Produkte bekannt, siehe auch The Application of Textile Rubber, David B. Wootton, Rapra Technology Limited, S. 113-114, 2001.

Das im Sinne der Erfindung eingesetzte Resorcin-Formaldehyd-Latex-Kondensat ist dabei vorzugsweise erhältlich durch die Thermofixierung eines RFL-Dips auf Basis von Resorcin-Formaldehyd (z.B. Rhenosin® T der Firma Rhein Chemie Rheinau GmbH und Penacolite® 50, erhältlich bei der Firma Indspec Chemical Corp.) in XSBR-Latex (carboxylierte Styrol-Butadien-Copolymere), HS-SBR-Latex (Styrol-Butadien-Copolymere), Nitril-Butadien-Copolymer Latex (NBR-Latex), CR-Latex (Polychloropren), PSBR-Latex (Pyridin-Styrol-Butadien-Copolymere) und/oder Acrylat-Latex (Reinacrylat- und Styrol-Acrylat-Copolymere) und/oder Styrol-Butadien-Vinylpyridin-Copolymer-Latices.

Bei dem RFL-Dip auf Basis von Resorcin-Formaldehyd handelt es sich um eine Dispersion der Einzelkomponenten Resorcin und Formaldehyd und/oder Formaldehyd zusammen mit einem Vorkondensat aus Resorcin und Formaldehyd und einer oder mehreren der nachstehend genannten Latex-Dispersion.

Als Latex-Dispersion kommen alle im Stand der Technik bekannten Latices in Frage, wie z.B. XSBR-Latex (carboxylierte Styrol-Butadien-Copolymere), HS-SBR-Latex (Styrol-Butadien-Copolymere), Nitril-Butadien-Copolymere (NBR-Latex), CR-Latex (Polychloropren), PSBR-Latex (Pyridin-Styrol-Butadien-Copolymere) und/oder Acrylat-Latex (Reinacrylat- und Styrol-Acrylat-Copolymere) und/oder Styrol-Butadien-Vinylpyridin-Copolymer-Latices, wobei Styrol-Butadien-Vinylpyridin-Copolymer-Latices (z.B. Pliocord VP 106, erhältlich bei der Firma Eliochem) bevorzugt sind. Dabei handelt es sich um handelsübliche Substanzen, die z.B. erhältlich sind bei der Polymer Latex GmbH oder der Firma Eliokem.

Die Resorcin-Formaldehyd-Latex-Dispersion wird dabei vorzugsweise durch Einrühren einer basischen wässrigen Mischung aus Resorcin und Formaldehyd oder vorzugsweise einer basischen wässrigen Mischung aus Formaldehyd und dem Form Vorkondensat aus Resorcin und Formaldehyd in einer basischen wässrigen Latexmischung erhalten.

Das Verhältnis von Resorcin zu Formaldehyd beträgt vorzugsweise 1:1 bis 2,5: 1.

Das Verhältnis von Latex zu dem Kondensat aus Resorcin und Formaldehyd, bezogen auf dessen Festkörperanteil, liegt vorzugsweise bei 10:1 bis 4: 1, besonders bevorzugt 6:1.

Bei den eingesetzten wässrigen basischen Lösungen handelt es sich vorzugsweise um wässrige Natrium-Hydroxid und/oder Ammonium-Hydroxid-Lösungen. Dabei sind pH-Werte von 10-11 bevorzugt.

Die Thermofixierung erfolgt dabei nach den dem Fachmann geläufigen Verfahren, wie z.B. durch Inkontaktbringen der nicht-vorbehandelten Faser(n) mit dem RFL-Dip, und einer anschließenden Trocknung (Fixierung) bei Temperaturen von 80 - 260 °C, bevorzugt 180- 250°C.

Bei dem erfindungsgemäß eingesetzten Gewebe handelt es sich um Gewebe aus Carbodiimid-haltigen Polyamid-Polyester-Fasern. Die Herstellung des Gewebes aus den Fasern ist in Textile Rubber, David B. Wootton, Rapra Technology Limited, S. 59-82, 2001 beschrieben.

Unter dem Begriff Fasern sind alle natürlichen und synthetischen Fasern zu verstehen, wie z.B. beschrieben in Textile Rubber, David B. Wootton, Rapra Technology Limited, S. 30-40, 2001.

Die Herstellung der Carbodiimid-haltigen Polyamid-Polyester Fasern erfolgt nach den dem Fachmann geläufigen Verfahren, wie z.B. beschrieben in Textile Rubber, David B. Wootton, Rapra Technology Limited, S. 15-30, 2001 aus dem Blend und die Herstellung des Carbodiimid-haltigen Polyamid-Polyester-Blends gemäß EP-A 1486535.

Als Polyamid (PA) einsetzbar sind vorzugsweise Polyamid 6, Polyamid 6.6, Polyamid 12, Polyamid 4,6 und Polyamid 11, Polyamid 6.9, Polyamid 6.10, Polyamid 6.12 und deren Gemische sowie halbaromatische Polyamide, amorphe Polyamide, Polyamid-Imid, PA12-Copolymere (z.B. Polyether- Blockamide) und/oder thermoplastisch- elastomere Polyamide handelt. Derartige Polyamide sind bekannt und der Literatur beschrieben z.B in Saechtling, Kunststoff Taschenbuch, 27. Ausgabe, 1992, Carl Hanser Verlag, Seite 465-479.

Als Polyester einsetzbar sind vorzugsweise thermoplastische Polyester auf Basis von aromatischen und/oder aliphatischen Dicarbonsäuren und einer aromatischen und/oder aliphatischen Dihydroxyverbindung und/oder bioabbaubare und/oder biobasierte Polyester.

Bevorzugt sind dabei Verbindungen auf Basis von aromatischen und/oder aliphatischen Dicarbonsäuren und einer aromatischen und / oder aliphatischen Dihydroxyverbindung.

Die erste Gruppe bevorzugter Polyester sind Polyalkylenterephthalate mit 2 bis 10 C-Atomen im Alkoholteil.

Derartige Polyalkylenterephthalate sind bekannt und in der Literatur beschrieben. Sie enthalten einen aromatischen Ring in der Hauptkette, der von der aromatischen Dicarbonsäure stammt. Der aromatische Ring kann auch substituiert sein, z.B. durch Halogen wie Chlor und Brom oder durch C₁-C₄-Alkylgruppen wie Methyl-, Ethyl-, i- bzw. n-Propyl- und n-, i- bzw. t-Butylgruppen.

Diese Polyalkylenterephthalate können durch Umsetzung von aromatischen Dicarbonsäuren, deren Estern oder anderen esterbildenden Derivaten mit aliphatischen Dihydroxyverbindungen in bekannter Weise hergestellt werden. Als bevorzugte Dicarbonsäuren sind 2,6-Naphthalindicarbonsäuren, Terephthalsäure und Isophthalsäure oder deren Mischungen zu nennen. Bis zu 30 mol-% der aromatischen Dicarbonsäuren können durch aliphatische oder cycloaliphatische Dicarbonsäuren, wie Adipinsäure, Azelainsäure, Sebacinsäure, Dodecandisäuren und Cyclohexandicarbonsäuren, ersetzt werden.

Von den aliphatischen Dihydroxyverbindungen werden Diole mit 2 bis 6 Kohlenstoffatomen, insbesondere 1,2-Ethandiol, 1,4-Butandiol, 1,2-Propandiol, 1,3-Propandiol, 1-6-Hexandiol, 1,4-Hexandiol, 1,4-Cyclohexandiol, 1,4-Cyclohexandimethylanol und Neopentylglykol oder deren Mischungen bevorzugt.

Als weitere Gruppe sind voll aromatische Polyester zu nennen, die sich von aromatischen Dicarbonsäuren und aromatischen Dihydroxyverbindungen ableiten.

Selbstverständlich kann man auch Mischungen von Polyalkylenterephthalaten und vollaromatischen Polyestern einsetzen. Diese enthalten im allgemeinen 20 bis 98 Gew.-% des Polyalkylenterephthalates und 2 bis 80 Gew.-% des vollaromatischen Polyesters.

Eine weitere Gruppe bilden Polyester basierend auf aliphatischen Dicarbonsäuren, wie z.B. Adipinsäure, Azelainsäure, Sebacinsäure, Dodecandisäuren und Cyclohexandicarbonsäuren, und aliphatischen Dihydroxyverbindungen, wie z.B. 1,2-Ethandiol, 1,4-Butandiol, 1,2-Propandiol, 1,3-Propandiol, 1-6-Hexandiol, 1,4-Hexandiol, 1,4-Cyclohexandiol, 1,4-Cyclohexandimethylanol und Neopentylglykol.

Selbstverständlich können auch Polyesterblockcopolymere wie Copolyetherester verwendet werden. Derartige Produkte sind bekannt und in der Literatur, z.B. in der US-A 3 651 014, beschrieben. Auch im Handel sind entsprechende Produkte erhältlich, z.B. Hytrel^{®} (DuPont) und Arnitel^{®} (DSM), Pibiflex^{®} (EniChem).

Unter Polyestern im Sinne der vorliegenden Erfindung sollen auch aromatische Polyestercarbonate verstanden werden, welche durch Umsetzung von aromatischen Dihydroxyverbindungen, vorzugsweise Bisphenol A und Bis-(4-Hydroxyphenyl)-2,2-propan, Phosgen und aromatischen Dicarbonsäuren wie Isophthalsäure und / oder Terephthalsäure erhältlich sind.

Bioabbaubare und/oder biobasierte Polyester im Sinne der Erfindung sind z.B. bioabbaubare, modifizierte Polyester wie z. B. Ecoflex der Fa. BASG AG, Polymilchsäure (PLA) kommerziell verfügbar, z.B. bei der Firma NatureWorks und/oder Blends aus PLA und bioabbaubaren, modifizierten Polyestern, wie z. B. Ecovio der Firma. BASF AG; und/oder Polyhydroxyalkanoate, wie z. B. Polyhydroxybutyrat (PHB), Polyhydroxyvalerat (PHV), Polyhydroxybutyratvalerat (PHBV), Polyhydroxyhexonat (PHH), Polyhydroxyoctanoat (PHO), Polyhydroxybutyrathexanoat (PHBH) kommerziell verfügbar, z.B. unter dem Namen MirelTM bei der Firma Telles bzw. als Enmat der Firma Tianan.

Das Verhältnis von Polyamid zu Polyester beträgt vorzugsweise 1:50 bis 1:1.

Bei dem in den Fasern eingesetzten Carbodiimid handelt es sich vorzugsweise um eine Verbindung der Formel

R'-(-N=C=N-R"'-)ₘ-R" , (I)

in der
R"' einen aromatischen, aliphatischen, cycloaliphatischen und/oder araliphatischen Rest bedeutet und bei m ≥ 1, R"' innerhalb des Moleküls gleich oder verschieden ist und bei verschiedenen Kombinationen jeder der vorgenannten Reste beliebig miteinander kombiniert werden kann,
R'" in dem Fall eines aromatischen oder eines araliphatischen Restes keinen oder in mindestens einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann, die auch Heteroatome, wie z.B. N, S und/oder O, oder aber Imidazolyl tragen können,
R' = C₁ - C₁₈-Alkyl, C₅-C₁₈-Cycloalkyl-, Aryl, C₇-C₁₈- Aralkyl, -R"'-NHCOS- R¹, -R"'-COO R¹, -R"'-OR¹, -R"'-N(R¹)₂, -R'''-SR¹ -R"'-OH, -R"'-NH₂, -R"'-NHR¹, -R"'Epoxy, -R"'-NCO, -R"'-NHCONHR¹, -R"'-NHCONR¹R² oder -R"'-NHCOOR³ und
R"= -H, -N=C=N-Aryl, -N=C=N-Alkyl, -N=C=N-Cycloalkyl, -N=C=N-Aralkyl, -NCO, -NHCONHR¹, -NHCONR¹R², -NHCOOR³, -NHCOS- R¹, -COO R¹, -O R¹, -N(R¹)₂, -SR¹, -OH, -NH₂, NH R¹,
wobei in R' und R" unabhängig voneinander R¹ und R² gleich oder verschieden sind und einen C₁-C₂₀-Alkyl-, C₃-C₂₀-Cycloalkyl-, -Aryl, C₇-C₁₈-Aralkylrest, Oligo-/Polyethylen- und/oder -Propylenglykole darstellen und R³ eine der Bedeutungen von R¹ hat oder einen Polyester- oder einen Polyamidrest bedeutet, und
m einer ganzen Zahl von 1 bis 5.000, bevorzugt von 1 bis 500, entspricht.

Ferner können auch polymere aliphatische Carbodiimide verwendet werden, beispielsweise auf Basis von Isophorondiisocyanat oder Dicyclohexylmethan-4,4'-di-isocyanat (H12-MDI = hydriertes MDI).

Ebenso einsetzbar sind biobasierte Carbodiimide, erhältlich aus der Umsetzung von mindestens einem der o.g. Carbodiimide mit mindestens einer freien N=C=O-Funktionalität und einer aus nachwachsenden Rohstoffen isolierten oder daraus hergestellten H-aciden Verbindung und/oder einem Hydroxycarbonsäureester mit 2-24-Kohlenstoffatomen.

Bei den im Sinne der Erfindung eingesetzten Carbodiimiden handelt es sich um handelsübliche Substanzen, die z.B. bei der Rhein Chemie Rheinau GmbH erhältlich sind.

In einer weiteren bevorzugten Ausführungsform der Erfindung beträgt die Menge an Carbodiimid 0,01 bis 10 Gew.-%, bezogen auf die Polyamid Polyester-Faser.

Die Schichtdicke der einzelnen Komponenten a), b) oder c) hängt von der beabsichtigen Anwendung ab.

Gegenstand der vorliegenden Erfindung ist auch ein Verfahren zur Herstellung des erfindungsgemäßen Elastomer-Faser-Verbundes , wonach ein Gewebe aus Carbodiimid-haltigen Polyamid-Polyester-Fasern in eine Resorcin-Formaldehyd-Latex-Dispersion (RFL-Dip) eingetaucht und getrocknet wird und diese Gewebe zusammen mit dem Elastomer vulkanisiert wird.

In einer weiteren bevorzugten Ausführungsform der Erfindung werden bereits die Fasern in eine Resorcin-Formaldehyd-Latex-Dispersion (RFL-Dip) eingetaucht, getrocknet und zu einem Gewebe weiterverarbeitet und diese Gewebe dann zusammen mit dem Elastomer vulkanisiert wird.

Gegenstand der vorliegenden Erfindung ist auch die Verwendung des erfindungsgemäßen Elastomer-Faser-Verbundes zur Herstellung von Reifen, Förderbändern, Zahnriemen, Airbags, Zelt-, LKW- und Abdichtplanen, Gummiboote, Schutzkleidung und/oder Schläuchen.

Der Rahmen der Erfindung erfasst alle oben stehenden und im Folgenden aufgeführten allgemeinen oder in Vorzugsbereichen genannten Restedefinitionen, Indizes, Parameter und Erläuterungen untereinander, also auch zwischen den jeweiligen Bereichen und Vorzugsbereichen in beliebiger Kombination.

Die nachfolgenden Beispiele dienen der Erläuterung der Erfindung, ohne dabei limitierend zu wirken.

### Ausführungsbeispiele:

Verwendete Chemikalien:
Penacolite® 50, ein Resorcin-Formaldehyd-Vorkondensat, erhalten bei der Firma Indspec Chemical Corp sowie
Pliocord® VP 106, ein Styrol-Butadien-Vinylpyridin-Copolymer-Latex mit 41 % Feststoffanteil, erhalten bei der Firma Eliokem.

**Tabelle 1 gibt die Zusammensetzungen der eingesetzten RFL-Formulierung zur Behandlung von Fasern wieder:**

| Material | RFL-Dip [Gew-Teile] |
|---|---|
| Wasser | 367,3 |
| Natronlauge (10 % -ig) | 6 |
| Penacolite® 50 | 42,4 |
| Formaldehyd (37 %-ig) | 20,5 |
| Pliocord® VP 106 | 411 |
| Ammoniak (25 %-ig) | 24,7 |

Als Reifengame wurden Fasern aus folgenden Materialien verwendet:

### Beispiel 1 (Vergleich)

PET-Garn (Polyethylenterephthalat)

### Beispiel 2 (erfindungsgemäß)

Polyamid-Polyester-Garn (aus einem Blend aus 30 % Polyamid und 70 % Polyethylenterephthalat- und 1 % eines aromatischen polymeren Carbodiimids der Formel (I), erhältlich bei der Rhein Chemie Rheinau GmbH unter dem Namen Stabaxol® P).

Die Vortrocknung der behandelten Fasern erfolgte in Beispiel 1 und 2 jeweils bei 135 °C für 60 s, die Fixierung bei 230 °C für 120 s.

Vulkanisation und Haftungsprüfung wurden nach ASTM 4393 durchgeführt. Als Substrat (Elastomer) kam Dunlop SP 5320, erhältlich bei der Firma Dunlop, zur Anwendung. Die Ergebnisse der Haftprüfung sind in Tabelle 2 zusammengefasst:

**Tabelle 2:**

| Test | Einheit | Beispiele | |
|---|---|---|---|
| | | Bsp. 1 (Vergleich) | Bsp. 2 (erfindungsgemäß) |
| Streifen-Test (Bedeckungsgrad) | % | <10 | <10 |
| Streifen-Test (Haftung) | N/2,5cm | 160 | > 200 |

Aus den Versuchen ist klar ersichtlich, dass der erfindungsgemäße Elastomer-Faser-Verbund eine extrem gute Haftung zeigt und dabei im Vergleich zum Stand der Technik deutlich wirtschaftlicher ist.

## Patentansprüche

1. Elastomer-Faser-Verbund aus den aufeinanderfolgenden Schichten aus
a) mindestens einem Elastomer,
b) mindestens einem Resorcin-Formaldehyd-Latex-Kondensat (RFL) und
c) mindestens einem Gewebe aus Polyamid-Polyester-Fasern, **dadurch gekennzeichnet, dass** die Polyamid-Polyester-Fasern mindestens ein Carbodiimid enthalten.

2. Elastomer-Faser-Verbund nach Anspruch 1, **dadurch gekennzeichnet, dass** es sich bei dem Carbodiimid um Verbindungen der Formel (I)
R'-(-N=C=N-R"'-)ₘ-R" handelt, (I)
in der
R'" einen aromatischen, aliphatischen, cycloaliphatischen und/oder araliphatischen Rest bedeutet und bei m ≥ 1, R"' innerhalb des Moleküls gleich oder verschieden ist und bei verschiedenen Kombinationen jeder der vorgenannten Reste beliebig miteinander kombiniert werden kann,
R'" in dem Fall eines aromatischen oder eines araliphatischen Restes keinen oder in mindestens einer ortho-Stellung, bevorzugt in beiden ortho-Stellungen zum aromatischen Kohlenstoffatom, das die Carbodiimidgruppe trägt, aliphatische und/oder cycloaliphatische Substituenten mit mindestens 2 Kohlenstoffatomen, bevorzugt verzweigte oder cyclische aliphatische Reste mit mindestens 3 Kohlenstoffatomen, insbesondere Isopropylgruppen, tragen kann, die auch Heteroatome tragen können,
R' = C₁- C₁₈-Alkyl, C₅-C₁₈-Cycloalkyl-, Aryl, C₇-C₁₈- Aralkyl, -R"'-NHCOS- R¹, -R'''-COO R¹, -R"'-OR¹, -R"'-N(R¹)₂, -R'''-SR¹, -R'''-OH, -R'''-NH₂, -R''-NHR¹, -R"'-Epoxy, -R"'-NCO, -R"'-NHCONHR¹, -R"'-NHCONR¹R² oder -R"'-NHCOOR³ und
R"= -H, -N=C=N-Aryl, -N=C=N-Alkyl, -N=C=N-Cycloalkyl, -N=C=N-Aralkyl, -NCO, -NHCONHR¹, -NHCONR¹R² , -NHCOOR³, -NHCOS- R¹, -COO R¹, -O R¹, -N(R²)₂, - SR¹, -OH, -NH₂, NH R¹,
wobei in R' und R" unabhängig voneinander R¹ und R² gleich oder verschieden sind und einen C₁ - C₂₀-Alkyl-, C₃-C₂₀-Cycloalkyl-, -Aryl, C₇-C₁₈-Aralkylrest, Oligo-/Polyethylen- und/oder -Propylenglykole darstellen und R³ eine der Bedeutungen von R¹ hat oder einen Polyester- oder einen Polyamidrest bedeutet, und
m einer ganze Zahl von 1 bis 5.000, bevorzugt von 1 bis 500, entspricht.

3. Elastomer-Faser-Verbund nach Anspruch 1 oder 2, **dadurch gekennzeichnet, dass** die Menge an Carbodiimid 0,01 bis 10 Gew.-%, bezogen auf die Polyamid Polyester-Faser, beträgt.

4. Elastomer-Faser-Verbund nach einem oder mehreren der Ansprüche 1 bis 3, **dadurch gekennzeichnet, dass** es sich bei dem Polyamid um Polyamid 6, Polyamid 6.6, Polyamid 12, Polyamid 4,6 und Polyamid 11, Polyamid 6.9, Polyamid 6.10, Polyamid 6.12 und deren Gemische) sowie halbaromatische Polyamide, amorphe Polyamide, Polyamid-Imid, PA12-Copolymere und/oder thermoplastisch elastomere Polyamide handelt.

5. Elastomer-Faser-Verbund nach einem oder mehreren der Ansprüche 1 bis 4, **dadurch gekennzeichnet, dass** es sich bei dem Polyester um thermoplastische Polyester auf Basis von aromatischen und/oder aliphatischen Dicarbonsäuren und einer aromatischen und/oder aliphatischen Dihydroxyverbindung, bioabbaubare und/oder biobasierte Polyester handelt.

6. Elastomer-Faser-Verbund nach einem oder mehreren der Ansprüche 1 bis 5, **dadurch gekennzeichnet, dass** das Verhältnis von Polyamid zu Polyester 1:50 bis 1:1 beträgt

7. Elastomer-Faser-Verbund nach einem oder mehreren der Ansprüche 1 bis 6, **dadurch gekennzeichnet, dass** das Resorcin-Formaldehyd-Latex-Kondensat, erhältlich ist durch die Thermofixierung eines RFL-Dips auf Basis von Resorcin-Formaldehyd in carboxylierten Styrol-Butadien-Copolymeren, Styrol-Butadien-Copolymeren, Nitril-Butadien-Copolymer, Polychloropren, Pyridin-Styrol-Butadien-Copolymeren, Acrylat-Latex Reinacrylat- und Styrol-Acrylat-Copolymere und/oder Styrol-Butadien-Vinylpyridin-Copolymer-Latices.

8. Elastomer-Faser-Verbund nach einem oder mehreren der Ansprüche 1 bis 7, **dadurch gekennzeichnet, dass** es sich bei der Elastomerschicht um vernetzte oder unvernetzte Elastomere auf Basis von Styrol-Butadien-Kautschuk, Butadien-Kautschuk, Naturkautschuk, synthetischen Naturkautschuk, Polyurethan-Elastomere oder Mischungen daraus handelt.

9. Verfahren zur Herstellung eines Elastomer-Faser-Verbundes nach einem oder mehreren der Ansprüche 1 bis 8, **dadurch gekennzeichnet, dass** ein Gewebe aus Carbodiimid-haltigen Polyamid-Polyester-Fasern in eine Resorcin-Formaldehyd-Latex-Dispersion (RFL-Dip) eingetaucht und getrocknet wird und diese zusammen mit dem Elastomer vulkanisiert werden.

10. Verfahren nach Anspruch 9, **dadurch gekennzeichnet, dass** die Fasern in eine Resorcin-Formaldehyd-Latex-Dispersion (RFL-Dip) eingetaucht, getrocknet und zu einem Gewebe weiterverarbeitet werden und diese Gewebe zusammen mit dem Elastomer vulkanisiert wird.

11. Verwendung des Elastomer-Faser-Verbundes nach einem der Ansprüche 1 bis 8 zur Herstellung von Reifen, Förderbändern, Zahnriemen, Airbags, Zelt-, LKW- und Abdichtplanen, Gummiboote, Schutzkleidung und/oder Schläuchen.
